# EUROPEAN PATENT SPECIFICATION

(11) **EP 3 824 192 B1**
(45) Date of publication and mention of the grant of the patent: **02.11.2022**
(21) Application number: 19756251.5
(22) Date of filing: 08.07.2019
(51) Int. Cl.: F15B 20/00, F15B 19/00, F16K 29/00, G05B 9/00, F16K 37/00

(54) **CONTROL AND SAFETY SYSTEM FOR CONVEYANCE CIRCUITS OF PRESSURIZED FLUIDS**
STEUERUNGS- UND SICHERHEITSSYSTEM FÜR FÖRDERKREISLÄUFE VON UNTER DRUCK STEHENDEN FLUIDEN
SYSTÈME DE COMMANDE ET DE SÉCURITÉ POUR CIRCUITS DE TRANSPORT DE FLUIDES SOUS PRESSION

(30) Priority: 16.07.2018 IT 201800007206
(43) Date of publication of application: 26.05.2021
(73) Proprietor: STI Srl, 24040 Levate (BG) (IT)
(72) Inventor: TONDOLO, Flavio, 24040 Levate (BG) (IT); ZENONI, Nicola, 24040 Levate (BG) (IT)
(74) Representative: Bruni, Giovanni
(86) International application number: PCT/IB2019/055782
(87) International publication number: WO 2020/016697

(56) References cited:
- EP-A1- 3 220 221
- WO-A1-2017/077343
- GB-A- 2 464 283

## Description

### Technical Field of the Invention

The present invention relates to a control and safety system suitable for conveying circuits of fluids under pressure.

In fact, during the operation of such circuits, one of the greatest risks occurs when at least a portion of the process circuit can be in overpressure conditions, with the consequent structural failure of a portion of this circuit and the leakage of the process fluid. For this reason, the present invention aims as a primary objective to verify the circuit and the components used for the implementation of countermeasures designed to avoid the emergence of such problems.

### Known Technique

Over time, various safety systems have been developed to prevent the leakage of a process fluid from a pressurized circuit, when an anomalous overpressure occurs that jeopardizes the integrity of the circuit itself.

A first system provides for the opening of an alternative discharge for the process fluid, should the pressure be beyond the safety limits. In such circumstances, the fluid is discharged and removed from the line of the circuit, so avoiding the problems mentioned above but adding complications related to how to treat the exhaust in the process flow.

According to other known systems and methodologies, it is preferred instead to block the fluid in appropriately designed portions of the plant, that is capable of containing high pressures and thus avoiding damage to the other portions of the installation. In such systems, process valves are therefore used which act as a barrier between the areas designed for high pressure and those which are not suitable for containing high pressures. These valves and the accompanying instrumentation used are called HIPPS, an acronym for "High Integrity Pressure Protection System".

Regarding the safety function they must perform, such process valves are kept constantly open in order to allow the continuous flow of the process fluid and are closed should problems of overpressure arise, thus carrying out the emergency maneuver, or exerting the safety function For this reason, amplification devices are often used which are necessary to achieve the safety function in adequate times, normally in the order of a few seconds. However, during the useful life of the system it may be useful to check the correct operation of such process valves by performing a partial closing operation of the valve itself in anticipation of a possible future use. Such operation, typically called "partial stroke test" (hereinafter, also "partial stroke operation"), is clearly more effective if it verifies the correct functioning of the complete valve kit accessories in question, without excluding any portion of the logic circuitry useful to the movement of the valve. It is also evident that by minimizing the execution time of such operation this can lead to both economic and technical advantages, as the process would be altered for a shorter period of time. Moreover, when performing the test with speeds comparable to the hypothetical emergency operation, this is more convincing as it approaches the real emergency conditions.

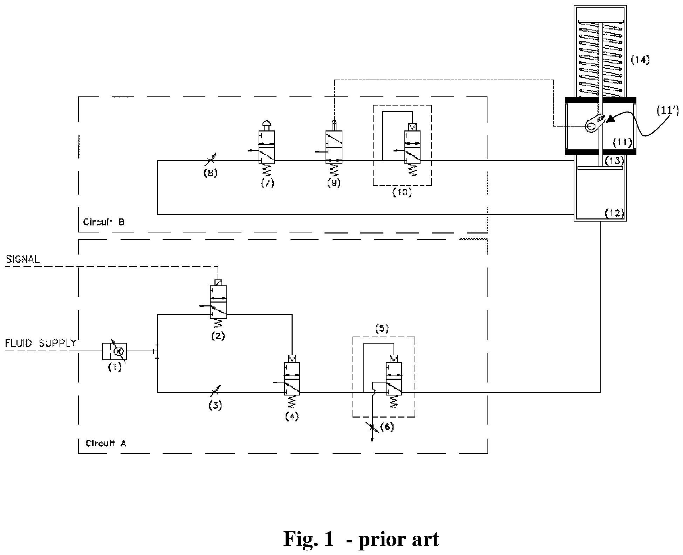

In order to better understand how the "partial stroke test" is carried out according to the known technique and what are the current limits which the invention proposes to overcome, an accurate explanation is necessary and for this reason reference is made to the attached figure 1 (which then represents the today's state of the art.

As shown in such figure, a system with an on-off single-acting actuator, configured for partial stroke operations, is typically made by:
- a pressure reducer 1,
- a solenoid valve 2,
- a three-way valve with pneumatic/hydraulic pilot 4,
- a three-way with manual pilot valve 7,
- a three-way mechanical pilot valve 9,
- three control valves 3, 6, 8,
- two quick-discharge valves 5, 10, and
- one single-acting on-off actuator 11.

Such system can be divided into two circuits: the first one, the circuit A, which is useful for the normal operation of the actuator, and the second one, the circuit B, which is necessary to carry out the partial stroke operation (partial stroke test).

Considering the circuit A, in the example shown in figure 1, the lower chamber 12 of the actuator 11 is the chamber to be pressurized in order to open the process valve (not shown in figure 1) on which the actuator single-acting actuator 11 is mounted. Under normal operating conditions of the valve, the latter must be kept fully open, and therefore the lower chamber 12 of the single-acting actuator 11 must be kept under pressure. For this reason, the lower chamber 12 is connected to the supply line of the working fluid according to the circuit A. The supply line of the working fluid (indicated in figure 1 as "FLUID SUPPLY") is connected to the solenoid valve 2 and to the control valve 3 through the pressure reducer 1. The solenoid valve 2 controls the pilot of the three-way valve with pneumatic/hydraulic pilot 4 while the control valve 3 regulates its supply. The output of the three-way valve with pneumatic/hydraulic pilot 4 is connected to the rapid discharge valve 5. The latter operates in two ways: either it can put the supply line of the working fluid in communication with the lower chamber 12 of the single-acting actuator 11 (and in such case we speak of a loading action of the actuator), or it can put in communication the lower chamber 12 of the single-acting actuator 11 with the control valve 6 (in the latter case we speak of an unloading action of the actuator). The control valve 6 communicates with the external environment or with a dedicated conveying circuit, so allowing the discharge of the fluid. The state of the quick-discharge valve 5, and therefore the mode with which it acts, is defined by the pressures established upstream of the same quick-discharge valve 5.

By acting on the solenoid valve 2, on the control valve 3 (for regulating the flow rate during the loading phase of the lower chamber 12 of the single-acting actuator 11) and on the control valve 6 (for regulating the flow rate in the exhaust phase of the lower chamber 12 of the single-acting actuator 11), such circuit is therefore able to manage the handling of the single-acting actuator 11, so allowing the closing or opening of the process valve on which it is mounted. During normal operation conditions, the valve is fully open, therefore the solenoid valve 2 is kept energized (electrical signal SIGNAL) in order to ensure the communication between the working fluid supply line and the lower chamber 12 of the single-acting actuator 11. In emergency conditions, when the fast closing of the process valve is required, the solenoid valve 2 will be de-energized. This will change the state of the quick discharge valve 5 and consequently the lower chamber 12 of the single-acting actuator 11 will be put in communication with the control valve 6.

Considering now the circuit B, in addition to what has been described before, such circuit has further components, which are useful for performing the partial stroke operation. As shown in figure 1, the lower chamber 12 is in fact connected to the upper chamber 13 by means of several components placed in series. More precisely and starting from the lower chamber 12 such components are: the control valve 8, the three-way manual pilot valve 7, the three-way mechanical pilot valve 9 and the quick-discharge valve 10. The latter can put in communication either the upper chamber 13 of the single-acting actuator 11 with the three-way mechanical pilot valve 9, or the upper chamber 13 of the single-acting actuator 11 with the external environment or with a dedicated conveying circuit. The mechanical pilot of the three-way valve 9 is also connected to the kinematic mechanism 11' of the single-acting actuator 11, such kinematic mechanism then representing the opening degree of the process valve on which the single-acting actuator 11 is mounted.

The usefulness of such circuit is to allow the communication between the lower chamber 12 and the upper chamber 13 of the single-acting actuator 11, in the case in which the valve is in a predetermined stroke range and at a time when there is such request by an operator. In particular, if the valve is located between the total opening and a determined intermediate position, the three-way mechanical pilot valve 9 is de-energized. The intermediate position is defined by the position of the kinematic mechanism 11' of the actuator 11. As in normal operating conditions the valve is completely open, the three-way mechanical pilot valve 9 is therefore de-energized. In such conditions, the only difference in order to create the by-pass between the chambers 12 and 13 and to perform the partial stroke test, is the state of the three-way manual pilot valve 7. If necessary, an operator can therefore energize such three-way valve 7, by starting the partial stroke operation. In fact:
- by energizing the three-way valve manual pilot valve 7 the chambers 12 and 13 of the actuator 11 are put in communication, with a consequent increase of pressure in the upper chamber 13 and the beginning of the valve closing phase. Once the predetermined stroke percentage has been reached, the three-way valve mechanical pilot valve 9 is energized, being driven by the mechanical connection set on the kinematic mechanism 11' of the actuator 11. In such conditions the rapid discharge valve 10 is de-energized, making a direct connection of the upper chamber 13 with the external environment or dedicated conveying circuit. The resulting pressure decrease of the upper chamber 13 therefore involves a trend by the single-acting actuator 11 by opening the process valve once again, thanks also to the pushing given by an elastic means, typically a spring 14. In such circumstances the mechanical connection set on the kinematic mechanism 11' of the actuator 11 causes a further change of state of the three-way mechanical pilot valve 9, by bringing it back to the de-energized state. The final effect is therefore the modulation of the pressure in the chambers 12 and 13 by means of the three-way mechanical pilot valve 9, by consequently keeping the process valve in the position associated with the intermediate position defined by the kinematic mechanism 11' of the actuator 11. Such position relates to the partial stroke operation;
- by subsequently de-energizing the three-way manual pilot valve 7 the supply to the upper chamber 13 is totally excluded, therefore leaving the partial stroke operation. Under normal operating conditions, the circuit A will then supply the lower chamber 12 by bringing the valve back to its fully open state.

From the example described, according to the known art, it is clear that:
- the emergency closing of the process valve (hence the fulfillment of its safety function) is carried out by an actuator and by the respective control circuit (circuit A, in the example illustrated),
- however, such circuit is not involved during the partial stroke test as such function is performed by a dedicated test circuit (circuit B), which can exclusively check the correct operation of the actuator-valve system only.

In such way the diagnostic coverage of the test is negligible, as it excludes the control circuit of the actuator which is useful for carrying out the emergency operation.

Document WO2017077343A1 discloses a system configured to actuate a partial stroke maneuver, however having a supply line of a working fluid not directly connected to the control valve.

There is therefore the need to define a new control and safety system which is suitable for conveying circuits of fluids under pressure, which overcomes the described drawbacks.

### Summary of the Invention

Main purpose of the present invention is obtained through the definition of a circuit system apt to perform both the partial stroke operation and the emergency operation. In this way, the present invention overcomes the limitations of the prior art, as during the partial stroke operation it permits to check the entire system made of actuator-valve-circuit process, thus ensuring a total diagnostic coverage which involves all components useful to perform the safety function, in emergency conditions. Furthermore, the control circuit is designed so as to perform the partial stroke operation in less time than that used by the systems according to the prior art, at the same time with times analogous to the actual operation, by taking advantage at the same time of the components already used for the actuator emergency operation and without implementing dedicated circuits.

These and other objects and advantages are achieved, according to the invention, by a control and safety system suitable for pressurized fluid conveying circuits, with the characteristics set forth in the appended independent claim.

Further preferred and/or particularly advantageous embodiments of the invention are described according to the characteristics set forth in the appended dependent claims.

### Brief Description of the Drawings

The invention will now be described with reference to the annexed drawings, which illustrate a non-limiting embodiment of the same, in which:
- figure 1 is a circuit diagram of a control and safety system for a pressurized fluid conveying circuit, according to the prior art,
- figure 2 is a circuit diagram of a control and safety system for a pressurized fluid conveying circuit, according to an embodiment of the present invention, and
- figure 3 is a circuit diagram of a control and safety system for a pressurized fluid conveying circuit, according to an alternative embodiment, without electric control, not being part of the present invention.

### Detailed Description

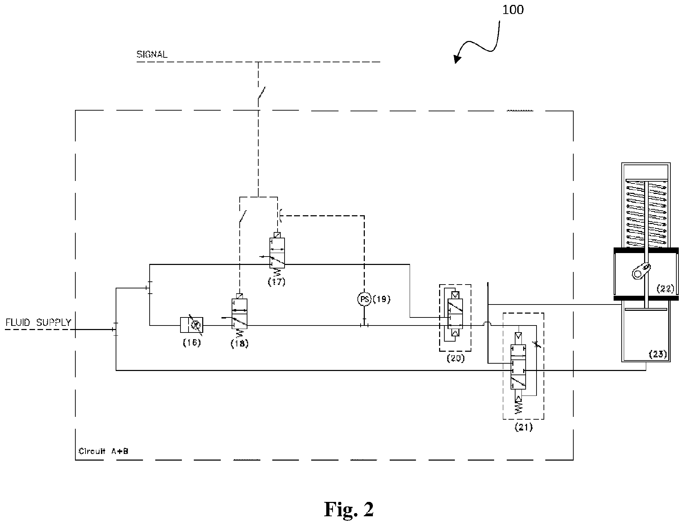

Referring now to figure 2, the control and safety system for a pressurized fluid conveying circuit, according to an implementation of the present invention, is used for performing the partial stroke operation on on-off single-acting actuators. This system 100 comprises:
- a pressure reducer 16,
- a control valve 17,
- a secondary valve 18,
- a driving element in the form of a pressure switch 19,
- a shuttle valve 20,
- a flow amplifier valve 21, and
- a single-acting actuator 22.

The system 100 by means of the circuit which will now be described is suitable both to perform the partial stroke operation, and for moving the single-acting actuator 22 under normal operating conditions and in emergency situations (rapid closing of the process valve).

Such circuit therefore includes both the functions performed by the circuit A and the circuit B of figure 1, by using the same circuit means for performing both the partial stroke operation and the emergency operation, with superimposed response characteristics. During the partial stroke operation therefore the entire control circuit is involved, so ensuring a complete diagnostic coverage of the system made of actuator-circuit-valve.

The working fluid line is directly connected to the flow amplifier valve 21, to the control solenoid valve 17 and to the pressure reducer 16. Downstream of the latter the secondary solenoid valve 18 is connected. The control solenoid valve 17 and the secondary solenoid valve 18 are both connected to the shuttle valve 20, which manages the delivery of the working fluid to the pilot means of the flow amplifier valve 21. The pressure switch reads the pressure downstream of the secondary solenoid valve 18 and upstream of the shuttle valve 20. The flow amplifier valve 21 is directly connected to the single-acting actuator 22 and has the function of loading or unloading the actuator 22 on the basis of the pressure signal which reaches the pilot.

Let us now consider both the solenoid valves 17 and 18 in their de-energized state. In the case where only the control solenoid valve 17 is energized, the supply fluid will drive the flow amplifier valve 21, by going through the shuttle valve 20. As a consequence, the amplified supply of the lower chamber 23 of the single-acting actuator 22, is allowed by the direct connection of the flow amplifier valve 21 to the working fluid line. In such conditions the valve normally operates, with the lower chamber pressurized 23 and the valve totally open. By acting on the secondary solenoid valve 18 it is then possible to perform the partial stroke operation, in particular:
- by energizing the secondary solenoid valve 18, the supply fluid reaches the shuttle valve 20 with a pressure equal to the value set by the pressure reducer 16. The pressure switch 19 therefore reads the pressure increase along the line and changes the state of the control solenoid valve 17, which closes the supply to the shuttle valve 20 and starts discharging the residual fluid in the line communicating with such valve 20. The simultaneous effect of pressurizing the line downstream of the secondary solenoid valve 18 and discharging the line downstream of the solenoid control valve 17, is translated into a reduction of the pilot pressure of the flow amplifier valve 21 (and, consequently, in an amplified discharge of the lower chamber 23 of the single-acting actuator 22). This behavior continues until a certain pressure value in the lower chamber 23 of the single-acting actuator 22, as a function of the pressure formed at the pilot of the flow amplifier valve 21, such pressure value being equal to the pressure value set at the pressure reducer 16. This means that for different setting values of the pressure reducer 16 it is possible to define different pressures in the lower chamber 23 of the single-acting actuator 22, and therefore a different location of the same actuator 22 and a different degree of opening of the process valve on which the actuator is mounted. The value of the partial stroke is therefore imposed by setting the pressure reducer 16;
- by subsequently de-energizing the secondary solenoid valve 18, it closes the supply to the shuttle valve 20 and discharges the residual fluid in the line communicating with such valve 20. The pressure drop along such line therefore involves the change of state of the control solenoid valve 17 through the impulse given by the pressure switch 19. The supply fluid therefore reaches the shuttle valve 20 exclusively from the line related to the control solenoid valve 17, allowing it to pass towards the pilot of the flow amplifier valve 21. As a consequence, the supply of lower chamber 23 of the single-acting actuator 22 is amplified through the flow amplifier valve 21, therefore with the complete opening of the valve.

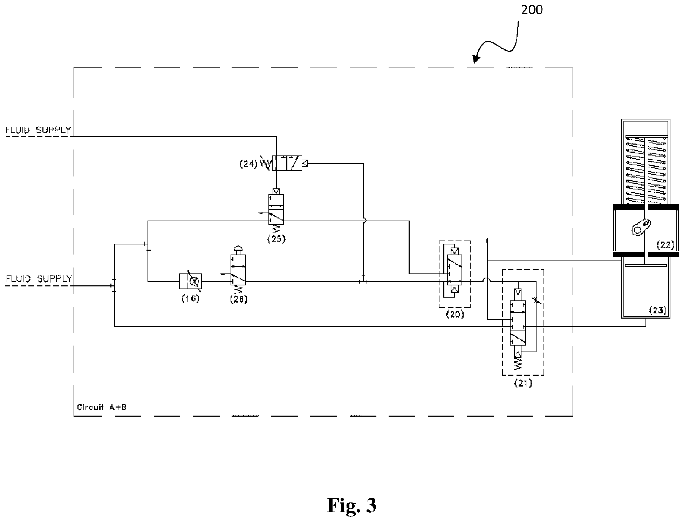

With reference to figure 3, an alternative embodiment of the control and safety system is now described for a pressurized fluid conveying circuit. This embodiment is not part of the present invention.

This system 200 is similar to the system previously described in figure 2, with the difference that in this latter configuration there is no component electrically driven. Such alternative may be of particular interest if there is no possibility to activate the partial stroke test and/or the emergency operation by means of an electrical signal. System 200 includes:
- a pressure reducer 16,
- a three-way pilot valve 24,
- a three-way control valve 25,
- a three-way secondary manual pilot valve 26,
- a shuttle valve 20,
- a flow amplifier valve 21, and
- a single-acting actuator 22.

In particular, with respect to system 100 of figure 2, in system 200:
- the control solenoid valve 17 is replaced by the three-way control valve 25,
- the secondary solenoid valve 18 is replaced by the secondary three-way manual pilot valve 26,
- the pressure switch 19 is replaced by the three-way pilot valve 2 4.

The working fluid line is directly connected to the pressure reducer 16, to the flow amplifier valve 21, to the three-way control valve 25 and to the three-way pilot valve 24. Downstream of the pressure reducer 16 the three-way secondary manual pilot valve 26 is connected. Downstream of the three-way pilot valve 24 the three-way control valve 25 is connected. Both the three-way secondary manual pilot valve 26 and the three-way control valve 25 are connected to the shuttle valve 20, which manages the delivery of working fluid to the pilot of the flow amplifier valve 21. The pilot of the three-way pilot valve 24 is further connected downstream of the three-way secondary manual pilot valve 26 and upstream of the shuttle valve 20. The flow amplifier valve 21 is directly connected to the single-acting actuator 22 and has the function of loading or unloading the actuator 22 according to the pressure signal that reaches the pilot.

The operation of system 200 is described below. Let us consider the three-way secondary manual pilot valve 26 in its de-energized state. In such conditions the three-way pilot valve 24 is de-energized and therefore allows the passage of the working fluid towards the pilot of the three-way control valve 25. The supply fluid will drive the flow-amplifier valve 21, by going from the three-way control valve 25 and the shuttle valve 20. As a consequence, the supply of the lower chamber 23 of the single-acting actuator 22 is increased, which is permitted by the direct connection of the flow amplifier valve 21 with the working fluid line. In such conditions the valve normally operates, with the lower chamber pressurized 23 and the valve totally open. Such condition is similar to the operation described for the circuit of figure 2, when only the control solenoid valve 17 is energized.

By acting instead on the three-way secondary manual pilot valve 26, it is possible to perform the partial stroke operation. In particular:
- by energizing the three-way secondary manual pilot valve 26 the supply fluid will drive the three-way pilot valve 24, which discharges the residual fluid to the pilot of the three-way control valve 25. The three-way control valve 25 is thus de-energized, thus releasing the residual fluid between the three-way control valve 25 and the pilot of the shuttle valve 20. As previously described regarding system 100 of fig. 2, the simultaneous effect of the three-way secondary manual pilot valve 26 and the three-way control valve 25 results in an amplified discharge of the lower chamber 23 of the single-acting actuator 22. In particular, for different setting values of the pressure reducer 16 it is possible to define different pressures in the lower chamber 23 of the single-acting actuator 22, therefore a different position of the same actuator 22 and a different degree of opening of the valve on which the single-acting actuator 22 is mounted. The value of the partial stroke, as well as for the implementation of figure 2, is therefore imposed by setting the reducer 16;
- by subsequently de-energizing the three-way secondary manual pilot valve 26, it closes the supply to the shuttle valve 20 and starts discharging the residual fluid in the line communicating with the same shuttle valve 20. The three-way pilot valve 24 changes its state and allows again the passage of the working fluid towards the pilot of the three-way control valve 25. The supply fluid therefore reaches the shuttle valve 20 exclusively from the line related to the three-way control valve 25, by allowing its passage towards the pilot of the flow amplifier valve 21. As a consequence, the supply of the lower chamber 23 of the single-acting actuator 22 is increased through the flow amplifier 21, thus with the complete opening of the valve.

In addition to the embodiments of the invention, as described above, it is to be understood that numerous further variants exist. It must also be understood that these implementation modes are only exemplary and do not limit neither the subject of the invention, nor its applications, nor its possible configurations. On the contrary, although the above description makes it possible for the professional man to carry out the present invention at least according to one of its exemplary configurations, it is to be understood that many variations of the described components are conceivable, without thereby departing from the subject of the invention, as defined in the attached claims, literally interpreted and/or according to their legal equivalents.

## Claims

1. A control and safety system (100) suitable for conveyance circuits of pressurized fluids provided with at least one process valve, said system comprising:
- a pressure reducer (16),
- a control valve (17),
- a secondary valve (18),
- a driving element (19),
- a shuttle valve (20),
- a flow amplifier valve (21),
- a single-acting actuator (22), the system (100) being a single circuit in which:
- a supply line of a working fluid is directly connected to the pressure reducer (16), to the control valve (17) and to the flow amplifier valve (21),
- the secondary valve (18) is connected downstream of the pressure reducer (16),
- the control valve (17) and the secondary valve (18) are both connected to the shuttle valve (20), which manages the working fluid supply to a pilot of the flow amplifier valve (21),
- the flow amplifier valve (21) connects the single-acting actuator (22) to the working fluid supply line or to a discharge line and is configured to load or discharge the actuator (22) according to the pressure signal that reaches the pilot of the flow amplifier valve (21);
the system (100) being therefore configured to actuate a partial stroke maneuver of the process valve, said partial stroke maneuver
- taking place in the same or in shorter time than the time required by a real emergency maneuver of the process valve in emergency conditions, and
- involving all the components used in the case of the real emergency maneuver in emergency conditions.

2. The system (100) according to claim 1, configured so that by energizing the control valve (17), the working fluid drives the flow amplifier valve (21), passing through the shuttle valve (20), and amplifies the supply of the lower chamber (23) of the single-acting actuator (22).

3. The system (100) according to claim 1, configured so that by energizing the secondary valve (18) the working fluid reaches the shuttle valve (20) with a pressure equal to the value set by the pressure reducer (16).

4. The system (100) according to claim 3, configured so that for different setting values of the pressure reducer (16) different pressures are defined in a lower chamber (23) of the single-acting actuator (22), then a different position of the same actuator (22) and a different degree of opening of the process valve on which the actuator itself is mounted.

5. The system (100) according to claim 4, configured in such a way that the pressurization of the line downstream of the secondary valve (18) and the discharge of the line downstream of the control valve (17) causes a reduction of the pilot pressure of the flow amplifier valve (21) and then an amplified discharge of the lower chamber (23) of the single-acting actuator (22).

6. The system (100) according to claim 1, configured so that when Z de-energizing the secondary valve (18), this latter closes the supply to the shuttle valve (20) and discharges the residual fluid in the line communicating with the shuttle valve (20).

7. The system (100) according to claim 6, configured so that the pressure drop along the line communicating with the shuttle valve (20) causes the status change of the control valve (17).

8. The system (100) according to claim 7, configured so that the working fluid reaches the shuttle valve (20) exclusively from the line relative to the control valve (17), which allows the working fluid passage towards the pilot of the flow amplifier valve (21), and amplifies the supply of the lower chamber (23) of the single-acting actuator (22) through the flow amplifier valve (21).

9. The system (100) according to any of the preceding claims, wherein the control valve is a solenoid control valve (17), the secondary valve is a secondary solenoid valve (18), both being powered by an electrical driving signal, and the driving element is a pressure switch (19) that reads the pressure downstream of the secondary solenoid valve (18) and upstream of the shuttle valve (20).

10. The system (100) according to claim 9, wherein the pressure switch (19) is configured to read the pressure increase along a signal line and to modify the state of the solenoid control valve (17), which closes the supply line to the shuttle valve (20), obtaining the discharge of the residual fluid in the line communicating with the shuttle valve (20).

## Patentansprüche

1. Steuer- und Sicherheitssystem (100), geeignet für unter Druck stehende Fluidförderkreisläufe, mit mindestens einem Prozessventil, wobei das System umfasst:
- ein Druckminderer (16),
- ein Steuerventil (17),
- ein Sekundärventil (18),
- ein Führungselement (19),
- ein Wechselventil (20),
- ein Durchflussverstärkungsventil (21),
- ein einfach wirkender Antriebsaktuator (22),
wobei das System (100) ein einzelner Kreislauf ist, wobei:
- an den Druckminderer (16), an das Steuerventil (17) und an das Durchflussverstärkungsventil (21) eine Versorgungsleitung für ein Arbeitsfluid direkt angeschlossen ist,
- das Sekundärventil (18) ist dem Druckminderer (16) nachgeschaltet,
- das Steuerventil (17) und das Sekundärventil (18) sind beide mit dem Wechselventil (20) verbunden, das die Zufuhr des Arbeitsfluides zu einem Pilotenventil des Durchflussverstärkungsventils (21) verwaltet,
- das Durchflussverstärkungsventil (21) den einfach wirkenden Antriebsaktuator (22) mit der Versorgungsleitung des Arbeitsfluides oder mit einer Abflussleitung verbindet und so konfiguriert ist, dass es den Aktuator (22) gemäß dem Drucksignal, das den Piloten erreicht, das Durchflussverstärkungsventil (21) lädt oder entlädt;
wobei das System (100) ist daher konfiguriert, um einen Teilhubbetrieb des Prozessventils zu betreiben, wobei der Teilhubbetrieb
- zur gleichen Zeit oder in kürzerer Zeit erfolgt als die Zeit, die für einen effektiven Notbetrieb des Prozessventils unter Notfallbedingungen erforderlich ist, und
- durch Einbeziehen von allen Komponenten, die im Falle eines effektiven Notfallmanövers unter Notfallbedingungen verwendet werden.

2. System (100) nach Anspruch 1, das so konfiguriert ist, dass durch Erregen des Steuerventils (17) das Arbeitsfluid das Strömungsverstärkungsventil (21) betätigt, durch das Wechselventil (20) strömt und die Versorgung der unteren Kammer (23) des Einzelantriebsaktuators (22) verstärkt.

3. System (100) nach Anspruch 1, das so konfiguriert ist, dass durch Erregen des Sekundärventils (18) das Arbeitsfluid das Wechselventil (20) mit einem Druck erreicht, der gleich dem durch den Druckminderer (16) eingestellten Wert ist.

4. System (100) nach Anspruch 3, das so konfiguriert ist, dass für unterschiedliche Einstellwerte des Druckminderers (16) unterschiedliche Drücke in einer unteren Kammer (23) des Einzelantriebsaktuators (22) definiert sind, also mit einer unterschiedlicher Position desselben Aktuators (22) und mit einem unterschiedlichem Öffnungsgrad des Prozessventils, an dem der Aktuator selbst montiert ist.

5. System (100) nach Anspruch 4, das so konfiguriert ist, dass die Druckbeaufschlagung der Leitung stromabwärts des Sekundärventils (18) und die Entlastung der Leitung stromabwärts des Steuerventils (17) eine Verringerung des Pilotendrucks des Strömungsverstärkungsventils (21) bewirkt und dann eine verstärkte Entlastung der unteren Kammer (23) des Einzelantriebsaktuators (22).

6. System (100) nach Anspruch 1, das so konfiguriert ist, dass bei deaktiviertem Sekundärventil (18) letzteres die Zufuhr zum Wechselventil (20) schließt und das Restfluid in der Verbindungsleitung mit dem Wechselventil (20) entlastet.

7. System (100) nach Anspruch 6, das so konfiguriert ist, dass der Druckabfall entlang der mit dem Wechselventil (20) kommunizierenden Leitung die Zustandsänderung des Steuerventils (17) bewirkt.

8. System (100) nach Anspruch 7, das so konfiguriert ist, dass das Arbeitsfluid das Wechselventil (20) ausschließlich von der Leitung relativ zum Steuerventil (17) erreicht, die den Durchgang des Arbeitsfluides zum Piloten des Durchflussverstärkungsventils (21) ermöglicht und die Versorgung der unteren Kammer (23) des Einzelantriebsaktuators (22) durch das Durchflussverstärkungsventil (21) verstärkt.

9. System (100) nach einem der vorhergehenden Ansprüche, wobei das Steuerventil ein Magnetsteuerventil (17) und das Sekundärventil ein Sekundärmagnetventil (18) ist und beide von einem elektrischen Steuersignal gespeist werden, und das Steuerelement ein Druckschalter (19) ist, der den Druck stromabwärts des sekundären Magnetventils (18) und stromaufwärts des Wechselventils (20) liest.

10. System (100) nach Anspruch 9, wobei der Druckschalter (19) so konfiguriert ist, dass er den Druckanstieg entlang einer Signalleitung liest und den Zustand des Solenoid-Steuerventils (17) ändert, das die Versorgungsleitung zum Wechselventil (20) schließt, wodurch das Restfluid in der mit dem Wechselventil (20) in Verbindung stehenden Leitung abgelassen wird.

## Revendications

1. Système de commande et de sécurité (100), adapté aux circuits de transport de fluide sous pression, équipé d'au moins une soupape de procédé, le système comprenant:
- un détendeur (16),
- une soupape de commande (17),
- une soupape secondaire (18),
- un élément de guidage (19),
- une soupape-navette (20),
- une soupape d'amplification de débit (21),
- un actionneur à simple effet (22),
le système (100) étant un circuit unique, dans lequel :
- une conduite d'alimentation en fluide de travail est reliée directement au détendeur (16), à la soupape de régulation (17) et à la soupape d'amplification de débit (21),
- la soupape secondaire (18) est branchée en aval du détendeur (16),
- la soupape de commande (17) et la soupape secondaire (18) sont toutes deux reliées à la soupape-navette (20), qui gère l'alimentation en fluide de travail d'un pilote de la soupape d'alimentation de débit (21),
- la soupape d'alimentation de débit (21) relie l'actionneur à simple effet (22) à la ligne d'alimentation en fluide de travail ou à une ligne de déchargement, et est configurée pour charger ou décharger l'actionneur (22) en fonction du signal de pression atteignant le pilote de la soupape d'amplification de débit (21);
le système (100) étant donc configuré pour faire fonctionner une opération à course partielle de la soupape de procédé, ladite opération à course partielle
- ayant lieu en même temps ou dans un délai plus court que le temps nécessaire pour un fonctionnement d'urgence efficace de la soupape de procédé dans des conditions d'urgence, et
- impliquant tous les composants utilisés en cas de manœuvre d'urgence efficace dans des conditions d'urgence.

2. Système (100) selon la revendication 1, configuré de telle sorte qu'en alimentant la soupape de commande (17) le fluide de travail actionne la soupape d'amplification de débit (21), passe à travers la soupape-navette (20) et amplifie l'alimentation de la chambre inférieure (23) de l'actionneur à simple effet (22) .

3. Système (100) selon la revendication 1, configuré de telle sorte qu'en activant la soupape secondaire (18), le fluide de travail atteint la soupape-navette (20), avec une pression égale à la valeur établie par le détendeur (16).

4. Système (100) selon la revendication 3, configuré de telle sorte que pour de différentes valeurs de réglage du détendeur (16), différences de pression sont définies dans une chambre inférieure (23) de l'actionneur à simple effet (22), donc avec une position différente du même actionneur (22) et avec un degré d'ouverture différent de la soupape de procédé sur laquelle l'actionneur lui-même est monté.

5. Système (100) selon la revendication 4, configuré de telle sorte que la mise sous pression de la conduite en aval de la soupape secondaire (18) et la décharge de la conduite en aval de la soupape de commande (17) provoquent une diminution de la pression du pilote de la soupape d'amplification de débit (21) donc un échappement amplifié de la chambre inférieure (23) de l'actionneur à simple effet (22).

6. Système (100) selon la revendication 1, configuré de telle sorte que, lorsque la soupape secondaire (18) est désactivée, celle-ci ferme l'alimentation de la soupape navette (20) et décharge le fluide résiduel dans la conduite communiquant avec la soupape navette (20).

7. Système (100) selon la revendication 6, configuré de telle sorte que la chute de pression le long de la conduite communiquant avec la soupape navette (20) provoque le changement d'état de la soupape de commande (17) .

8. Système (100) selon la revendication 7, configuré de telle sorte que le fluide de travail atteigne la soupape navette (20) exclusivement depuis la conduite relative à la soupape de commande (17), ce qui permet le passage du fluide de travail vers le pilote de la soupape d'amplification de débit (21), et amplifie l'alimentation de la chambre inférieure (23) de l'actionneur à simple effet (22) à travers la soupape d'amplification de débit (21) .

9. Système (100) selon l'une des revendications précédentes, dans lequel la soupape de commande est une soupape à solénoïde de commande (17), la soupape secondaire est une soupape à solénoïde secondaire (18) et toutes deux sont alimentées par un signal de commande électrique et l'élément de commande est un pressostat (19) qui lit la pression en aval de la soupape à solénoïde secondaire (18) et en amont de la soupape navette (20).

10. Système (100) selon la revendication 9, dans lequel le pressostat (19) est configuré pour lire l'augmentation de pression le long d'une ligne de signal et pour changer l'état de la soupape à solénoïde de commande (17), qui ferme la ligne d'alimentation vers la soupape navette (20), obtenant le déchargement du fluide résiduel dans la ligne en communication avec la soupape navette (20).
